# EUROPEAN PATENT SPECIFICATION

(11) **EP 2 684 677 B1**
(45) Date of publication and mention of the grant of the patent: **10.06.2015**
(21) Application number: 12195617.1
(22) Date of filing: 05.12.2012
(51) Int. Cl.: B29C 61/00, C08K 3/22, C08K 3/26

(54) **Advanced halogen free flame retardant composition for heat shrinkable material and method of making the same**
Verbesserte halogenfreie flammenhemmende Zusammensetzung für wärmeschrumpfbares Material und Herstellungsverfahren dafür
Composition avancée retardatrice de flamme, exempte d'halogène, pour matériau thermorétractable et son procédé de fabrication

(30) Priority: 12.07.2012 US 201213547311
(43) Date of publication of application: 15.01.2014
(73) Proprietor: King Abdulaziz City for Science & Technology (KACST), 11442 Riyadh (SA)
(72) Inventor: Basfar, Ahmed, 11442 Riyadh (SA)
(74) Representative: Goddar, Heinz J.

(56) References cited:
- EP-A1- 0 393 813
- WO-A1-01/51554
- WO-A1-2006/026256
- CN-A- 102 276 905
- JP-A- 2001 316 533
- US-A- 5 378 539
- US-A1- 2011 180 301
- DATABASE WPI Week 201038 Thomson Scientific, London, GB; AN 2010-F55294 XP002694152, & CN 101 704 971 A (JIANGSU DASHENG THERMAL SHRINKAGE MATERI) 12 May 2010 (2010-05-12)
- DATABASE WPI Week 201036 Thomson Scientific, London, GB; AN 2010-F20436 XP002694153, & CN 101 701 087 A (JIANGSU DASHENG THERMAL SHRINKAGE MATERI) 5 May 2010 (2010-05-05)

## Description

### FIELD OF TECHNOLOGY

This disclosure relates generally to a composition for making a halogen free flame retardant heat shrinkable material for tubes and method of making the same.

### BACKGROUND OF THE INVENTION

Heat shrinkable tube products are used in interconnection or termination for electrical insulation/strain relief/bonding cables/connectors, harnessing and/or jacketing/bundling/color coding of electric wires, in automobiles for fuel/brake/power-steering pipes and in home applications to prevent pipe corrosion from fluid/water, chemical penetration or mechanical damage.

The heat shrinkable tube products are also widely divided based on the degree of flexibility in the following categories: Rigid type, Semi rigid type and Flexible type. The heat shrinkable tube products require specified operating/shrinkage temperature range, high chemical/electrical resistance, and shrinkage ratio: minimum radial direction shrinkage/maximum longitudinal direction shrinkage and uniformity of tube thickness/shape/surface for practical usage. There is a need for superior quality tube materials to meet the increasing demand.

CN 102276905 A relates to identification casing technology field, in particular relates to radiation cross-linked heat shrinkable tubing products identified flame retardant formulations and production methods.

US 2011/180301 A1 focusses on improving mechanical properties without deteriorating flame retardancy in peroxide cross-linked and radiation cross-plinked thermosetting clean flame retardant compositions.

JP 2001-316533 A discloses a non halogenated flame-retardant resin composition having flame retardancy equivalent to polyvinyl chloride, allowing incinerating disposal and good mechanical properties.

### SUMMARY

The disclosure describes a composition and a process of making the halogen free flame retardant material and using the same for tube encasing. The heat shrinkable tube products are widely divided by the degree of flame retardancy/toxicity as the following categories:
1. Flammable type: very easy flammable, high toxicity
2. Halogen contained flame retardant type: flame retardancy with high toxicity
3. Halogen free flame retardant type: flame retardancy without toxicity

It is an embodiment of the invention to provide a process of making a heat shrinkable tube, comprising: melting a polymer 100 parts by weight for one minute at 120°C at a speed of 40 rpm, wherein the polymer is at least one of a ethylene vinyl acetate (EVA), EVA/polyethylene, ethylene alpha olefin, ethylene alpha olefin/polyethylene, ethylene ethyl acrylate, ethylene ethyl crylate/polyethylene, EVA/polyethylene/ethylene propylene diene terpolymer (EPDM), ethylene alpha olefin/polyethylene/EPDM and ethylene ethyl acrylate/polyethylene/EPDM; mixing the following ingredients to the polymer that has been melted and further melting for 10 minutes at 120°C to form a mixture: 70 parts a flame retardant by weight, wherein the flame retardant is at least one of a magnesium hydroxide, huntite hydromagnesite and a combination thereof; 1-20 parts of a secondary flame retardant by weight, wherein the secondary flame retardant is at least one of a red phosphorous, zinc borate and ammonium octamolybdate; 0.1-0.5 parts of an antioxidant by weight; 1-10 parts of a processing aid by weight; 1-6 parts of a carbon black by weight; 1-15 parts of a terpolymer of ethylene, butyl acrylate and maleic anhydride (EBM) by weight; and 1-15 parts of a radiation cross-linking agents by weight.

In one embodiment, the process further comprises blending the mixture 120°C and passing it through a hot press and compressed at 165°C for 20 minutes to form a sheet.

In one embodiment, the process further comprises radiation cross-linking the sheet using 25kGy double electron beam accelerator of 10 MeV at ambient temperature.

It is a further object to provide a halogen free flame retardant composition for heat shrinkable tube composition suitable for the inventive process, comprising: a polymer is 100 parts by weight, wherein the polymer is at least one of an ethylene vinyl acetate (EVA), EVA/polyethylene, ethylene alpha olefin, ethylene alpha olefin/polyethylene, ethylene ethyl acrylate, ethylene ethyl acrylate/polyethylene, EVA/polyethylene/ethylene propylene diene terpolymer (EPDM), ethylene alpha olefin/polyethylene/EPDM and ethylene ethyl acrylate/polyethylene/EPDM; a flame retardant is 70 parts by weight, wherein the flame retardant is at least one of a magnesium hydroxide, huntite hydromagnesite and a combination thereof; a secondary flame retardant is 1-20 parts by weight, wherein the secondary flame retardant is at least one of a red phosphorus, zinc borate and ammonium octamolybdate; a terpolymer of ethylene, butyl acrylate and maleic anhydride is 1-15 parts by weight; an antioxidant 0.1-0.5 parts by weight; a processing aid is 1-10 parts by weight; a radiation cross-linking agent is 1-15 parts by weight; and a carbon black is 1-6 parts by weight. In one embodiment, a high flame retardant composition free of halogen compound is described.

In one embodiment, the composition halogen free flame retardant material comprises of high flame retardancy, high thermal resistance, uniformity in tube thickness/shape/surface as well as high radial direction shrinkage force and low longitudinal direction shrinkage ratio for practical usage.

In another embodiment the composition meets the industrial standards for usage. In another embodiment, the antioxidant is a pentaerythritol tetrakis(3(3,5-di-tert-buty-4-hydroxyphenyl)propionate. In another embodiment, the radiation cross-linking agent is Trimethylolpropane trimetharcrylate.

In one embodiment, the polymer can be 50% lower by weight when compared to all other components. In another embodiment, the polymer contains 5-20% ethylene propylene diene terpolymer by weight along with other polymers.

The methods and compositions that are disclosed herein may be made and used in any means for achieving various aspects, and may be executed using combination of compositions and/or any machine. Other features will be apparent from the accompanying drawings and from the detailed description that follows.

### BRIEF DESCRIPTION OF THE DRAWINGS

Example embodiments are illustrated by way of example and not limitation in the figures of the accompanying drawings, in which like references indicate similar elements and in which:
**Figure 1** is a graph showing mechanical properties of EVA based halogen free flame retardant compounds in the presence of LLDPE.
**Figure 2** is a graph showing mechanical properties of EVA based halogen free flame retardant compounds in the absence of LLDPE.
**Figure 3** is a graph showing mechanical properties of EVA based halogen free flame retardant compounds in the absence of LLDPE and low terpolymer content.

Other features of the present embodiments will be apparent from the accompanying drawings and from the detailed description that follows.

### DETAILED DESCRIPTION

Several compositions and methods for making a halogen free flame retardant material for tube are described herein. Although the present embodiments have been described with reference to specific example embodiments, it will be evident that various modifications and changes may be made to these embodiments without departing from the broader spirit and scope of the various embodiments.

The main required properties of practical heat shrinkable tube products are generally known as the following items:
- Operating temperature range
- Electrical resistance
- Flame retardancy (Some cheap products show flammability)
- Chemical resistance
- Minimum shrinkage temperature
- Shrinkage ratio: minimum radial direction shrinkage/maximum longitudinal direction shrinkage
- uniformity of tube thickness, shape and surface

In practical usage of heat shrinkable tube products, high temperature sources (for example, heat gun) are used to shrink tubes. Therefore, operating and shrinkage temperature range are very important in practical usage. Through cross-linking reactions, material such as polyolefins can exhibit non-melt properties. Cross-linking reactions may be done through electron beam radiation process. Thus, among the main required properties, operating and shrinkage temperature ranges can be easily obtained by cross-linking reactions of materials. Polymers also show excellent electrical insulation processes.

To improve flame retardancy in the instant application a novel composition is described. According to prior art, most of polymers (or polymer base compounded materials) are very flammable hence polymers or polymer base compounded materials are not suitable for heat shrinkable tube product applications. When heat shrinkable tube products are heated by high temperature source such as a heat gun, flammable tube products can be easily ignited. For preventing fire ignition from high temperature source, flame retardant materials are currently being used in heat shrinkable tube products.

Additionally, shrinkage ratio (higher radial direction shrinkage/lower longitudinal direction shrinkage) and uniformity of tube thickness/shape/surface are very important requirements for practical usages. Specially, higher radial direction shrinkage force with lower longitudinal direction shrinkage ratio is very important factor in heat shrinkage applications. If the products show weak radial direction shrinkage force in practical applications, the products are not suitable for heat shrinkable purposes. In most commercial applications the lower longitudinal direction shrunk quality is desired. For the above mentioned reasons, shrinkage ratio (minimum radial direction shrinkage/maximum longitudinal direction shrinkage) has to be achieved at standard acceptable levels.

The heat shrinkable tube products are widely divided by the degree of flame retardancy/toxicity such as 1) Flammable type: very easy flammable, high toxicity 2) Halogen contained flame retardant type: flame retardancy with high toxicity 3) Halogen free flame retardant type: flame retardancy without toxicity.

However, in the case of halogen free flame retardant type heat shrinkable tubes, high filler (flame retardants) loading is unavoidable to obtain high flame retardant property. From the high filler loading, the polymer portions in total compounds are much reduced and then finally show very weak shrinkage force. Moreover, in spite of showing high flame retardancy, halogen free flame retardant composite materials show unstable mechanical properties because of high filler loading. Therefore, shrinkage force (this can be expressed as shape memory effect) decreases in proportion as flame retardant loading increases because only the polymer can affect shrinkage force. Nevertheless, high shrinkage force is required in practical usages.

The regulation of maximum longitudinal direction shrinkage is also a very important factor in heat shrinkable tube applications. It is proposed that the longitudinal direction shrinkage is caused from longitudinal direction extensions which are generated from tube production process. In general, longitudinal direction extension can occur in a tube extrusion process and under beam electron beam cross-linking process.

Tube extrusion is very similar to normal cable or wire extrusion, i.e., polymer (or compound) melting → melt polymer transferring → shaping (tube shape) → moving out from extruder → sizing in cool water → cooling. In this process, melt polymers can be extended at the sizing and cooling process. If the melt strength of the polymer (or compound) is high enough to prevent longitudinal direction extension, the produced tube shows a very small or no longitudinal direction extension. Similarly, longitudinal direction extension easily occurs in the process of radiation cross-linking by electron beam. In general, radiation cross-linking under electron beam is conducted by multiple round trips (in general, more than 20 times, it depends on tube size and thickness) between two big wheels. In the cases of flammable type and halogen contained flame retardant type heat shrinkable tubes, only small (or nothing) longitudinal direction extension may occur because the materials (compounds) contain large portion of polymers in compounds. Polymers (or high polymer content compounds) have enough force to prevent longitudinal direction extension in room temperature (in general, radiation cross-linking under electron beam is conducted at room temperature) in spite of multiple round trips between two big wheels.

However, the case of halogen free flame retardant materials (or compounds) is different from both cases (flammable type and halogen contained flame retardant type) because polymer portion in compounds is much smaller than those of the flammable type and halogen contained flame retardant type heat shrinkable tubes. As mentioned, high content of 80-150phr of the flame retardants are needed to achieve a commercially acceptable flame retardancy in the case of halogen free flame retardant materials (or compounds). This means that the polymer content in the total compound is very small and so it is very difficult to prevent longitudinal direction extension in halogen free flame retardant heat shrinkage tube production.

In the cases of halogen free flame retardant heat shrinkage tube production process, it is very difficult to obtain high radial direction shrinkage force with low longitudinal direction shrinkage ratio. However, halogen free flame retardant heat shrinkable tube products may meet appropriate mechanical properties (tensile strength/elongation at break), high electrical resistancy, high thermal resistance, high flame retardancy and uniformity of tube thickness/shape/surface as well as high radial direction shrinkage force and low longitudinal direction shrinkage ratio for practical usage.

In general, the thickness of general grade heat shrinkable tube products is 0.3-1.2 mm/before expansion and 0.2-0.8 mm/after expansion. And the thickness of thin-wall heat shrinkable tube products is 0.15-0.25 mm/before expansion and 0.1-0.15 mm/after expansion. It is found that the thickness of thin-wall heat shrinkable tube products is much thinner than those of general grade. Accordingly, in the case of thin-wall halogen free flame retardant heat shrinkage tube production process, controlling uniformity of tube thickness/shape/surface is not easy because the polymer portion is very small in total compounds. Only polymer portion in compounds has enough melt strength in the extruding and tensile strength in the under beam cross-linking process. The flame retardant portion in compounds has no melt strength in extruding or tensile strength in under beam cross-linking process.

For solving the afore mentioned problems in halogen free flame retardant heat shrinkable tube products, many engineers attempted this by improvements of production lines such as applying fine controlling system of the extruder line (for example, synchronous payoff/take up device and free tension take up device), applying automatic tension controlling system and applying fine controlling system of the under beam wheel design in electron beam radiation equipment (for example, synchronous payoff/take up device and free tension take up device). However, it was not easy to reduce longitudinal direction shrinkage ratio with increasing radial direction shrinkage force with only improving production lines.

Here, this invention introduces newly developed advanced halogen free flame retardant compounds for heat shrinkable tube products which can reduce longitudinal direction shrinkage ratio with increasing radial direction shrinkage force while maintaining uniformity of tube thickness/shape/surface.

Table 1 shows the typical requirements of flammable flexible polyolefin heat shrinkable tube products. The materials in flammable flexible polyolefin heat shrinkable tube products consist mainly of 95-100% polymers and some other components. Therefore, the shape memory effects (expressed by shrinkage force) of the materials and the melt strength in the tube extruding process are very high. Accordingly, the products show very high radial direction shrinkage force and high melt strength. The process of tube extruding, rough tube extruding and under electron beam cross-linking gives very low longitudinal direction extension.

**Table 1: Flammable flexible polyolefin heat shrinkable tubes**

| Properties | Items | Values | Specifications |
|---|---|---|---|
| Mechanical | Tensile Strength | Min 11 MPa | ASTM D412, UL224 |
| | Elongation at break | Min 200% | |
| | Tensile Strength after 158°C/168 hours | Min 8MPa | |
| | Elongation at break after 158°C/168 hours | Min 100% | |
| | Heat Shock | Pass after 250°C /4hours | UL224 |
| | Low Temperature Flexibility | No Crack after -55 C /lhour | |
| Electrical | Dielectric Voltage Withstand(before and after 158°C/168 hours) | Min 2,500V/1min | UL224 |
| | Volume Resistivity | Min 1 x 10¹⁴ Ωcm | ASTM 257 |
| Chemical | Copper Corrosion | No Corrosion | UL224 (after 158°C/168 hours) |
| | Copper Stability Elongation | No sign of degradation, Min 100% | |
| Shrinkage Ratio | Radial Direction: Min 50% | | |
| | Longitudinal Direction: Max 7% | | |

**Table 2: Flame retardant type flexible polyolefin heat shrinkable tubes: The following property (flame retardancy) is added on Table 1 requirements.**

| Property | Values | Specifications |
|---|---|---|
| Flame retardancy | Pass | VW-1, UL 1581 |

Table 2 shows the typical requirements of flame retardant (halogen contained) flexible polyolefin heat shrinkable tube products. The materials for flame retardant (halogen contained) flexible polyolefin heat shrinkable tube products consist mainly of 80-90% polymers, 10-20% halogen contained flame retardants and some other components. In this case, the shape memory effects (expressed by shrinkage force) of the materials are high and melt strength in the tube extruding process is also high because polymer portion is high in total compounds. Therefore, the products show high radial direction shrinkage after cross-linking reactions even in the case of thin-wall products. And, relatively high melt strength in the tube extruding process gives low longitudinal direction shrinkage even rough tube extruding and under electron beam cross-linking process conditions.

**Table 3: Halogen free flame retardant type flexible thin-wall polyolefin heat shrinkage tubes: The following properties (flame retardancy and smoke index) are added on Table 1 requirements**

| Properties | Values | Specifications |
|---|---|---|
| Flame retardancy | Pass | VW-1, UL 1581 |
| Smoke index (SI) | Maximum 70/flame mode | ASTM E662 |
| | Maximum 100/non flame mode | |

Table 3 shows the typical requirements of halogen free flame retardant flexible type thin-wall polyolefin heat shrinkable tube products. Here, it is found that all requirements of mechanical/electrical/chemica! properties and shrinkage ratio are same for the non flame retardant grade and halogen contained flame retardant grade. However, the tests of smoke index and flame retardancy are added on general purpose product (Flammable flexible polyolefin heat shrinkable tubes) test items. To pass smoke index and flame retardancy properties, the materials (compounds) may contain a high volume of non halogen flame retardants in compounds. If we use halogen contained flame retardants in compounds, it may not the pass the smoke index test.

As explained, the thickness of thin-wall heat shrinkable tube products is 0.15-0.25 mm/before expansion and 0.1-0.15 mm/after expansion. In the case of halogen free flame retardant materials (or compounds), high content of 80-150phr of flame retardants are needed to achieve acceptable flame retardancy and smoke index test. This means that polymer content is less than 50% in total compounds. Therefore, it is very difficult to obtain enough shape memory effects (obtaining high radial direction shrinkage force) with maintaining uniformity of tube thickness/shape/surface because only polymer portion in compounds has melt strength in extruding and tensile strength in the under beam cross-linking process.

In the meantime, halogen free flame retardant materials in heat shrinkable tube applications are required to meet electrical properties, mechanical properties, flame retardancy and low smoke generation. The thermal aging testing conditions of halogen free flame retardant insulation materials (cross-linked materials) for using halogen flame retardant insulation materials in heat shrinkable tube applications is 158°C for 168 hours. To pass the severe condition of 158°C for 168 hours, the materials may be highly cross-linked. For developing halogen free flame retardant materials (compounds) in heat shrinkable tube applications, the following properties are deeply considered.
- High temperature grade
- May be zero halogen flame retardant components.
- High flame retardancy.
- High electrical and chemical resistancy.
- Higher radial direction shrinkage: in general, higher than 50%.
- Lower longitudinal direction: in general, lower than 7%.
- Higher speed of tube extruding and under beam cross-linking process.

As shown in requirements in Table 3, high loading of flame retardants are needed to achieve commercially acceptable flame retardancy for heat shrinkable tube applications. High loading of flame retardants lead to the major deterioration of the mechanical properties/shape memory effects (obtaining high radial direction shrinkage force)/uniformity of tube thickness/shape/surface. High loading of flame retardants materials may meet appropriate tensile strength, elongation at break, thermal resistance, flame retardancy and shape memory effects (direction shrinkage force) to have prolonged use.

Commonly the composition of halogen free flame retardant materials, EVA(ethylene vinyl acetate), EVA/LDPE(low density polyethylene)(or LLDPE(linear LDPE), ethylene alpha olefin or ethylene ethyl acrylate are widely used as base polymers because of the high flame retardants load ability which can increase the flame retardancy. The main flame retardants consist of inorganic materials, such as, aluminum trihydroixide (ATH), magnesium hydroxide (MH) and huntite hydromagnesite (HH), because of their high decomposition temperature and smoke suppressing ability for halogen free flame retardant materials. However, in general, more than 50% w/w loading is required to achieve high flame retardancy. Unfortunately such high levels of flame retardants loading can cause the interfacial problems between base polymers and flame retardants and then, can be the major determinant of mechanical properties and shape memory effects (radial direction shrinkage force).

The materials of halogen free flame retardant heat shrinkable tube applications require not only excellent mechanical/electrical/chemical resistant/flame retardant properties but also high shape memory effects (radial direction shrinkage force). As described, most of polymers show excellent electrical and chemical resistance properties. The two qualities of mechanical properties and shape memory effects (obtaining high radial direction shrinkage force) are the most important items which may be solved in the halogen free flame retardant heat shrinkable tube applications. For example, the minimum, required tensile strength is 11 MPa and minimum elongation at break is 200% for halogen free flame retardant materials. A minimum required radial direction shrinkage ratio is 50% and maximum longitudinal direction shrinkage ratio is 7% for practical usage. Without satisfying these two important factors (mechanical properties and shrinkage ratio), the halogen free flame retardant materials are not suitable for heat shrinkable tube applications.

To increase shape memory effects (obtaining high radial direction shrinkage force) and thermal stability, the halogen free flame retardant materials for heat shrinkable tube applications may be cross-linked. For polyolefin type polymer cross-linking, three different cross-linking methods are widely using at present. Namely, three different cross-linking methods are described as cross-linking by peroxide compound, cross-linking by Silane compound and cross-linking by electron beam radiation at room temperature. In general, continuous cross-linking by electron beam radiation is widely used in heat shrinkable tube manufacturing because this method is very suitable for small size cable and tubes.

In general, halogen free flame retardant compositions consist of 100 parts polymer (EVA (Ethylene Vinyl Acetate), EVA/polyethylene, EEA (Ethylene Ethyl Acrylate)/polyethylene or Ethylene Alpha Olefin/polyethylene) by weight and 80-150parts inorganic flame retardants such as magnesium hydroxide, aluminum hydroxide and huntite hydromagnesite by weight, 2-20 parts intumescent flame retardants such as red phosphorus, zinc borate, and boric acid by weight, 0.5-1.5 parts antioxidants by weight. Additionally carbon black, weathering protection agent, processing aid, coupling agent, lubricant and thermal stabilizer are compounded for the special purposes. In the case of radiation cross-linking reactions, cross-linking agent is added to the above mentioned compound. Consequently, polymer portion in the total compound is very low and so, the polymer portion of the total compound in halogen free flame retardant compounds is under 50% by weight. In addition, the particle size of flame retardants used in halogen free flame retardant compounds are under 50µm with various typical particle structures that provide excellent dispersion of the polymer/flame retardants and is very important to obtain optimal mechanical properties. If the arrangements between polymer and flame retardants are perfect and no space exists between polymer and flame retardants, the resulted mechanical properties may be the same or slightly lower compared with non flame retardants content compounds.

It is possible that mechanical properties may decrease with increased content of flame retardants even if sufficient compounded conditions are met and a small gap between polymer and flame retardants will be detrimental for not meeting the standard qualities. If we find some materials which can fill space gaps between polymer and name retardants, these filling materials can prevent the decrease of mechanical properties on highly flame retardants contained compounds.

### Experimental Materials

Evaflex 360 (ethylene vinyl acetate, producer: DuPont-Mitsui Polychemicals Co/Japan, vinyl acetate content: 25 %, melt mass-flow rate (MFR) (190 °C/2.16 kg): 2.0 g/10 min) and LLDPE 118(melt flow index: 1.0 g/1.0 min, producer: SABIC/Saudi Arabia) were used as base polymers. NORDEL IP 3722P (semi-crystalline, very low diene containing ethylene propylene diene terpolymer (EPDM), Ethylidenenorbornene composition: 0.5%, Producer: DOW Chemicals/USA) and Vistalon 7001 (Ethylene Propylene Diene Monomers (EPDM), ENB ethylidene norbornene (diene) weight: 5 wt %, Producer: ExxonMobil/USA) were used for increasing elastomeric strength in compounds. Irganox 1010(chemical name: pentaerythritol tetrakis(3(3,5-di tert-buty-4-hydroxyphenyl)propionate, producer: CIBA specialty chemicals/Switzerland, melting range: 110-125 °C) was used as antioxidant. TMPTMA (trifunctional monnmer, Trimethylolpropane trimetharcrylate, SR-350, producer: SARTOMER/ U.S.A., Glass temperature: 27 °C, Flash point: 137 °C.) was used as radiation cross-linking agent. MAGNIFIN A H10A (magnesium hydroxide, formula: Mg(OH)₂, producer: Albemarle/France) and Ultracarb LH 15X (huntite hydromagnesite, formula: Mg₃Ca(CO₃ )₄, Mg₅(CO₃)₄(OH)₂.3H₂O, producer: Minelco/USA) were used as flame retardant. Firebrake ZB (zinc borate, producer: Borax/USA) and Boric Acid (Producer: Rose Mill Chemicals & Lubricant/U.S.A.) were used as secondary flame retardants. Random terpolymer of ethylene, butyl acrylate and maleic anhydride (EBM), Lotader 3210 is supplied by ARKEMA, France. Extrudable cable grade with 6% of butyl acrylate, 3.1% of maleic anhydride, melt flow rate (MFR) (190°C/2.16 kg) of 5.0 g/10 min. having a melting temperature of 107°C.

### Preparation of Samples

Test specimens were prepared as follows: EVA pellets were melted and mixed in Internal Mixer 350S (Brabender Co., Germany) for one minute at 120°C at a speed of 40 rpm. Then flame retardants and antioxidant were mixed with melted EVA for 10 minutes at 120°C. Pre-mixed compounds were moved to Two Roll Mill (Brabender Co., Germany) for fine blending. Temperature of two roll mill was 120°C. The mixture was moved to hot press and compressed at 165°C for 20 minutes. Sheets of test specimen were prepared with dimensions of 110 mm x 185 mm and thickness of 2 mm. Hot compression was made at 150°C for 10 minutes. Radiation cross-linking was performed at Sure Beam Middle East Co. in Riyadh, Saudi Arabia using vertically double Electron Beam Accelerators of 10 MeV. The irradiation dose was controlled by successive passes of 25kGy at ambient temperature in air.

Tests: Mechanical properties (tensile strength and elongation at break) were measured using a universal testing machine Model 5543 from Instron, USA in accordance with ASTM D 638M with testing conditions: speed of 500 mm/minute at 25 °C. Gel content was measured by using Soxhlet extraction technique in xylene (130°C) in accordance with ASTM 2765. LOI (Limiting Oxygen Index) is one of the simple methods to estimate the flame retardancy of the materials. LOI was performed using an apparatus of Fire Testing Technology limited (Incorporating Stanton Redcroft), UK in accordance with ISO 4589 and ASTM D 2863. LOI corresponds to the minimum percentage of oxygen needed for the combustion of specimens (80 x 10 x 1 mm) in an oxygen-nitrogen atmosphere.

The other method to estimate the flame retardancy of the materials is North American fire test, which is called VW-1 (UL 1581 flammability standard by Underwriters Laboratories, USA). This test is generally known as the vertical wire (VW) test because it tests the materials of flame retardancy along vertically suspended wire. VW-1 test was performed using a flammability chamber of CEAST Co., Italy, in accordance with ASTM D 1581. This is a small scale flame test conducted on a single 24 inch length of wire. The flame source is gas burner with a heat output of approximately 3,000 BTU/hour. The flame is applied for 15 seconds and is then reapplied 4 more times. If the sample burns longer than 60 seconds after any application, or if the indicator flag or cotton batting is ignited during the test, the sample fails the test.

Volume resistivity is measured at room temperature (25 °C) in accordance with ASTM D257 using high resistance meter of Model HP4339B, HP, USA.

At first, to find the difference of mechanical properties with/without flame retardant in base polymer as a function of various cross-linking degrees, the study of electron beam radiation cross-linking was conducted as shown in pre-test EXAMPLE 1 and 2.

Pre-test EXAMPLE 1 (without flame retardant in base polymer) is showing the relationships between mechanical properties and gel content (this shows the degree of cross-linking ratio) of EVA as a function of radiation dose. It is found that tensile strength increases with an increase of dose up to 100 kGy and then decreases with an increase of dose above 100 kGy. Elongation at break decreases with an increase of the dose. In case of EVA, it is considered that degradation reaction can be occurred from 150kGy.

Pre-test EXAMPLE 2 (with flame retardant in base polymer) is showing the relationships between mechanical properties and gel content of EVA based 150phr magnesium hydroxide formulations as a function of radiation dose. Similar trends of Pre-test EXAMPLE 1 are obtained, namely, tensile strength increases and elongation at break decreases with increase of dose. From both pre-tests, it is found that optimum radiation dose of magnesium hydroxide contained formulations is 100-150 kGy.

From both Pre-test EXAMPLEs, it is clearly found that mechanical properties of flame retardants contained formulations are much less than those of non flame retardants contained formulations in before cross-linking and after cross-linking status. In the case of before cross-linking formulations, when we compare P-1 (non flame retardants contained formulation) and P-6 (150 phr flame retardants contained formulation), tensile strength of P-6 is 46% of that of P-I and elongation at break of P-6 is 18 % of that of P-1. Even increasing cross-linking degree, mechanical properties of flame retardants contained formulations never meet those of uncross-linked/non flame retardants contained formulations. From the results, it is proposed that 1) highly flame retardants contained formulations show very poor mechanical properties (low tensile strength and low elongation at break) in uncross-linked status. Consequently, this can result in highly flame retardants contained formulations showing a higher longitudinal direction extension ratio (this problem results high longitudinal direction shrinkage ratio at finished products) in tube extruding process and under beam radiation cross-linking process. Specially, in the cases of thin-wall heat shrinkable tubes, the thickness is 0.15-0.25 mm/after extrusion (before expansion) and 0.1-0.15 mm/after expansion. Due to very thin thickness, longitudinal direction extension can easily occur and then, show poor surface and poor thickness uniformity. These two factors (longitudinal direction extension and thickness uniformity are very important in heat shrinkable tube products. 2) high flame retardants contained formulations showing very poor mechanical properties after cross-linking reactions. Consequently, this can result in high flame retardants contained formulations showing lower shape memory effects (lower radial direction shrinkage force), because lower shape memory effects come from lower mechanical property materials. Specially, in the cases of thin-wall heat shrinkable tubes, radial direction shrinkage forces are very weak because of very thin thickness. Therefore, it is proposed that radial direction shrinkage forces may be increased for practical usage.

### Pre-test EXAMPLE 1

| Ingredient/Property | P-1 | P-2 | P-3 | P-4 | P-5 |
|---|---|---|---|---|---|
| EVA | 100 | 100 | 100 | 100 | 100 |
| Pentaerythritol tetrakis(3(3,5-di tert-buty-4-hydroxyphenyl)propionate | 1 | 1 | 1 | 1 | 1 |
| Trimethylolpropane trimetharcrylate | 5 | 5 | 5 | 5 | 5 |
| Dose (kGy) (air atmosphere) | 0 | 50 | 100 | 150 | 200 |
| Tensile strength(MPa) | 26 | 28 | 27 | 25 | 26 |
| Elongation at break(%) | 850 | 600 | 540 | 510 | 490 |
| Gel % | 0 | 36 | 67 | 73 | 82 |

### Pre-test EXAMPLE 2

| Ingredient/Property | P-6 | P-7 | P-8 | P-9 | P-10 |
|---|---|---|---|---|---|
| EVA | 100 | 100 | 100 | 100 | 100 |
| Magnesium hydroxide | 150 | 150 | 150 | 150 | 150 |
| Pentaerythritol tetrakis(3(3,5-di tert-buty-4-hydroxyphenyl)propionate | 1 | 1 | 1 | 1 | 1 |
| Trimethylolpropane trimetharcrylate | 5 | 5 | 5 | 5 | 5 |
| Dose (kGy) (air atmosphere) | 0 | 50 | 100 | 150 | 200 |
| Tensile strength(MPa) | 12 | 16 | 18 | 19 | 20 |
| Elongation at break(%) | 150 | 200 | 190 | 170 | 140 |
| Gel % | 0 | 33 | 60 | 74 | 75 |

At the next step, practical halogen free flame retardant formulations were conducted. Pre-test EXAMPLE 3 shows mechanical properties and flame retardancy of conventional radiation cross-linkable halogen free flame retardant formulations. The reason of using LDPE (or LLDPE) with EVA is to maintain proper mechanical properties at the state of thermoplastic halogen free flame retardant compositions before cross-linking reaction. In general, high filler mixable polymers, such as EVA are soft in room temperature. Therefore, using only very soft grade polymers without any rigid grade polymers in base polymers can easily transform the shape. To achieve appropriate rigidity, the mixing of high temperature grade polymer such as polyethylene is required. LLDPE 118(melt flow index: 1.0 g/10 min, producer: SABIC/Saudi Arabia) was used as rigid base polymer.

It is found that elongation at break decreases with an increase of secondary flame retardants content. It is difficult to pass VW-1 test with only using main flame retardant without using secondary flame retardants. However, when the main flame retardants and secondary flame retardants are used together, it is possible to pass VW-1 test. Nevertheless, poor mechanical properties (specially, poor elongation at break) are obtained. As described, halogen free flame retardant heat shrinkable tube products require minimum tensile strength: 11 MPa, elongation at break: 200% and high flame retardancy. It is well known that the most important factors of halogen free flame retardant materials of heat shrinkable tube products are mechanical properties and flame retardancy. Without satisfying these two important factors, the halogen free flame retardant materials are not suitable for heat shrinkable tube products.

### Pre-test EXAMPLE 3

| Ingredient/Property | P-11 | P-12 | P-13 | P-14 |
|---|---|---|---|---|
| EVA | 80 | 80 | 80 | 80 |
| LLDPE | 20 | 20 | 20 | 20 |
| Magnesium hydroxide | 120 | 120 | 120 | 120 |
| Secondary flame retardants (Zinc borate, Boric acid) | 15 | 25 | 35 | 45 |
| Pentaerythritol tetrakis(3(3,5-di tert-buty-4-hydroxyphenyl)propionate | 1 | 1 | 1 | 1 |
| Trimethylolpropane trimetharcrylate | 5 | 5 | 5 | 5 |
| Dose (kGy) (air atmosphere) | 150 | | | |
| Tensile strength(MPa) | 18 | 19 | 19 | 19 |
| Elongation at break(%) | 85 | 80 | 75 | 70 |
| LOI(%) | 32 | 33 | 35 | 36 |
| VW-1, UL1581 | Pass | Pass | Pass | Pass |

At next step, the relationships between before and after radiation cross-linking as a function of flame retardant content are investigated. Mechanical properties and flame retardancy of before and after cross-linking as a function of flame retardant content are shown in Conventional Pre-test EXAMPLE 4-5.

### Pre-test EXAMPLE 4

| Ingredient/Property | P-15 | P-16 | P-17 | P-18 | P-19 | P-20 | P-21 | P-22 |
|---|---|---|---|---|---|---|---|---|
| EVA | 100 | 100 | 100 | 100 | 100 | 100 | 100 | 100 |
| Magnesium hydroxide | 90 | 120 | 150 | 180 | 90 | 120 | 150 | 180 |
| Pentaerythritol tetrakis(3(3,5-di tert-buty-4-hydroxyphenyl)prop ionate | 1 | 1 | 1 | 1 | 1 | 1 | 1 | 1 |
| Trimethylolpropane trimetharcrylate | 5 | 5 | 5 | 5 | 5 | 5 | 5 | 5 |
| Dose (kGy) (air atmosphere) | - | - | - | - | 150 | | | |
| Tensile strength(MPa) | 8 | 10 | 11.5 | 12 | 17.5 | 20 | 22 | 24 |
| Elongation at break(%) | 225 | 200 | 150 | 115 | 305 | 240 | 165 | 115 |
| LOI (%) | 26 | 33 | 41 | 44 | 24 | 30 | 38 | 40 |

### Pre-test EXAMPLE 5

| Ingredient/Property | P-23 | P-24 | P-25 | P-26 | P-27 | P-28 | P-29 | P-30 |
|---|---|---|---|---|---|---|---|---|
| EVA | 100 | 100 | 100 | 100 | 100 | 100 | 100 | 100 |
| Huntite hydromagnesite | 90 | 120 | 150 | 180 | 90 | 120 | 150 | 180 |
| Pentaerythritol tetrakis(3(3,5-di tert-buty-4-hydroxyphenyl)prop ionate | 1 | 1 | 1 | 1 | 1 | 1 | 1 | 1 |
| Trimethylolpropane trimetharcrylate | 5 | 5 | 5 | 5 | 5 | 5 | 5 | 5 |
| Dose (kGy) (air atmosphere) | - | - | - | - | 150 | | | |
| Tensile Strength(MPa) | 7 | 8 | 9 | 10 | 14.5 | 10 | 10 | 10 |
| Elongation at break(%) | 240 | 180 | 140 | 100 | 400 | 510 | 400 | 285 |
| LOI (%) | 25 | 29 | 36 | 40 | 25 | 33 | 42 | 43 |

In the cases of magnesium hydroxide contained formulations, it is shown that tensile strength after cross-linking is much higher than those before cross-linking. Tensile strength increases with increases of magnesium hydroxide content for both before and after cross-linking. Tensile strength increases almost linearly over the range 90 - 180 phr (magnesium hydroxide) for both cases. On the other hand, elongation at break decreases with increase of magnesium hydroxide content for before and after cross-linking.

Mechanical properties of huntite hydromagnesite contained formulations are much different from those of magnesium hydroxide content formulations. Namely, elongation at break after cross-linking is much higher than that before cross-linking. Elongation at break after cross-linking shows approximately 2 times higher values than that before cross-linking. On the contrary, tensile strength is slightly affected by huntite hydromagnesite content and cross-linking. Tensile strength increases slightly with increase of magnesium hydroxide content above 120phr. Moreover, tensile strength of huntite hydromagnesite formulations are much lower that those of magnesium hydroxide formulations.

From the results, it is apparent that mechanical properties are greatly influenced by cross-linking and choice of flame retardants. Namely, tensile strength is improved by cross-linking in magnesium hydroxide formulations while elongation at break is increased by cross-linking reaction in huntite hydromagnesite formulations.

At next step, two flame retardants formulations were conducted as shown in Pre-test EXAMPLE 6.

It is found that mechanical properties are changed with changing of magnesium hydroxide/ huntite hydromagnesite mixing ratios. As expected, tensile strength decreases and elongation at break increases with the increase of huntite hydromagnesite content. Compared with single flame retardant formulations (pre-test EXAMPLE 1-5), much higher mechanical properties are obtained from magnesium hydroxide/ huntite hydromagnesite mixing formulations.

From the results, it is found that 1) in the case of before cross-linking, mechanical properties are very poor. Tensile strength is lower than 10 MPa in various combinations of two flame retardants. When we produce thin-wall heat shrinkable tubes, the thickness is only 0.15-0.25 mm/after extrusion (before expansion) and 0.1-0.15 mm/after expansion. Due to very thin thickness, longitudinal direction expansion can be easily occurred and then, give us poor surface and poor thickness uniformity. As described, when the materials have low tensile strength such as halogen free flame retardant compounds, longitudinal direction extension can be occurred in the process of tube extrusion and multi rounding movements in under-beam cross-linking equipment. To avoid longitudinal direction extension in heat shrinkable tube productions, tensile strength before cross-linking may be increased. 2) in the case of after cross-linking, mechanical properties are much increased by cross-linking reactions. Specially, both properties (tensile strength and elongation at break) are relatively high. However, in the case of thin-wall products (thickness: 0.1-0.15 mm), mechanical properties are not sufficient to make high memory force heat shrinkable tube products.

### Pre-test EXAMPLE 6

| Ingredient/Property | P-31 | P-32 | P-33 | P-34 | P-35 |
|---|---|---|---|---|---|
| EVA | 85 | 85 | 85 | 85 | 85 |
| LLDPE | 15 | 15 | 15 | 15 | 15 |
| Huntite hydromagnesite | 63 | 73 | 83 | 93 | 103 |
| Magnesium hydroxide | 65 | 55 | 45 | 35 | 25 |
| Secondary flame retardants (Zinc borate, Boric acid, Barium strearate) | 25 | | | | |
| Pentaerythritol tetrakis(3(3,5-di tert-buty-4-hydroxyphenyl)propionate | 1 | 1 | 1 | 1 | 1 |
| Trimethylolpropane trimetharcrylate | 5 | 5 | 5 | 5 | 5 |
| Before cross-linking | | | | | |
| Tensile strength(MPa) | 8 | 9 | 9 | 9 | 8 |
| Elongation at break(%) | 140 | 145 | 130 | 140 | 145 |
| Dose (kGy) (air atmosphere) | 150 | | | | |
| Tensile strength(MPa) | 17 | 15 | 15 | 14 | 12 |
| Elongation at break(%) | 175 | 200 | 200 | 220 | 240 |
| LOI (%) | 39 | 39 | 37 | 37 | 38 |
| VW-1, UL1581 | Pass | Pass | Pass | Pass | Pass |

### EXAMPLES

The following non-limiting examples illustrate formulations of the inventive compositions.

From the results of Pre-tests, in both cases of before and after cross-linking reactions, it is found that mechanical properties decrease by high flame retardants content. It is proposed that the poor mechanical properties are caused by existing space gaps between polymer and flame retardants in spite of perfect arrangements of polymer and flame retardants. Here, we tried to find some adhesive materials for filling space gaps between polymer and flame retardants. We proposed that these filling materials can prevent decrease of mechanical property of high flame retardants contained compounds for heat shrinkable tube applications. This invention started from this point.

For adhesive filling materials, terpolymer of ethylene/butyl acrylate/maleic anhydride was introduced.

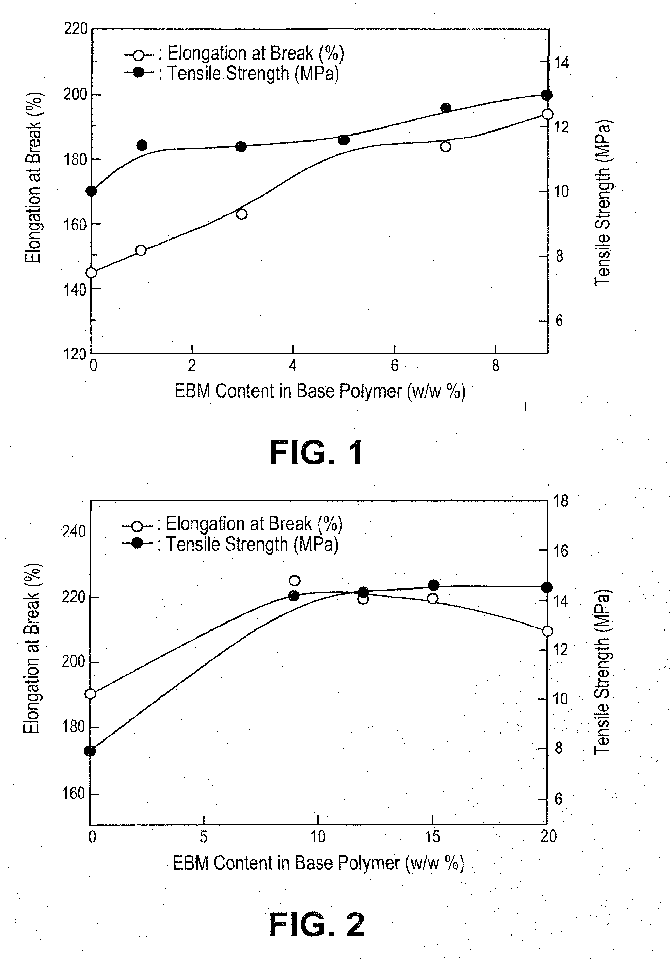

EXAMPLE 1 shows EVA based halogen free flame retardant compounds as a function of terpolymer of ethylene/butyl acrylate/maleic anhydride content. (Before cross-linking reactions, magnesium hydroxide content: 114phr, carbon black content: 6phr, in the condition of various LLDPE contents and low terpolymer of ethylene/butyl acrylate/maleic anhydride content range) As shown in Figure 1, mechanical properties are changed with various terpolymer of ethylene/butyl acrylate/maleic anhydride contents. As explained, mechanical properties of before cross-linking reactions are very important because low tensile strength can be the reasons of longitudinal direction extension in heat shrinkable tube productions. Surprisingly, mechanical properties (tensile strength and elongation at break) increase with increase of terpolymer of ethylene/butyl acrylate/maleic anhydride content.

In general, tensile strength and elongation at break show opposite trends in polymeric materials. Namely, when tensile strength increases, elongation at break decreases or vice versa. When we add new material to improve mechanical properties in polymer compounds, tensile strength increases and elongation at break decreases, or visa versa. Nevertheless, in the case of EXAMPLE 1, both mechanical properties (tensile strength and elongation at break) increase with increase of terpolymer of ethylene/butyl acrylate/maleic anhydride content. Namely, in the case of terpolymer of ethylene/butyl acrylate/maleic anhydride contained formulations, both properties are increased simultaneously. From the results, it is apparent that terpolymer of ethylene/butyl acrylate/maleic anhydride contributes greatly to increase of both mechanical properties in the presence of high flame retardants (inorganic fillers) content. The simultaneous increase in both tensile strength and elongation at break is attributed to presence of strong adhesive forces which conglomerate base polymers and flame retardants. The adhesive forces increase the pulling power between base polymers and flame retardants and then strain force and elongation length increase. It is evident that these strong adhesive forces are due to the presence of terpolymer of ethylene/butyl acrylate/maleic anhydride.

### EXAMPLE I

| Ingredient/Property | 1 | 2 | 3 | 4 | 5 | 6 |
|---|---|---|---|---|---|---|
| EVA | 85 | 85 | 85 | 85 | 85 | 85 |
| LLDPE | 15 | 14 | 12 | 10 | 8 | 6 |
| Terpolymer of ethylene/butyl acrylate/maleic anhydride | 0 | 1 | 3 | 5 | 7 | 9 |
| Magnesium hydroxide | 114 | 114 | 114 | 114 | 114 | 114 |
| Secondary flame retardants | 11 | 11 | 11 | 11 | 11 | 11 |
| Carbon black | 6 | 6 | 6 | 6 | 6 | 6 |
| Pentaerythritol tetrakis(3(3,5-di tert-buty-4-hydroxyphenyl)propionate | 1 | 1 | 1 | 1 | 1 | 1 |
| Tensile strength(MPa) | 10 | 11.5 | 11.5 | 11.5 | 12 | 12 |
| Elongation at break(%) | 145 | 150 | 160 | 185 | 185 | 195 |
| LOI (%) | 37 | 36 | 37 | 36 | 35 | 35 |
| VW-1, UL1581 | Pass | Pass | Pass | Pass | Pass | Pass |
| Volume resistivity (Ωcm) | 5 x 10¹⁴ | 5 x 10¹⁴ | 5 x 10¹⁴ | 5 x 10¹⁴ | 5 x 10¹⁴ | 5 x 10¹⁴ |

Figure 1: Mechanical properties of EVA based halogen free flame retardant compounds as a function of terpolymer of ethylene/butyl acrylate/maleic anhydride (EBM) content. (Before cross-linking reactions, magnesium hydroxide content: 114phr, carbon black content: 6phr, in the condition of various LLDPE contents and low terpolymer of ethylene/butyl acrylate/maleic anhydride content range)

At next step, higher terpolymer of ethylene/butyl acrylate/maleic anhydride content EVA based halogen free flame retardant compounds was conducted. EXAMPLE 2 shows EVA based halogen free flame retardant compounds as a function of terpolymer of ethylene/butyl acrylate/maleic anhydride content. (Before cross-linking reactions, magnesium hydroxide content: 114phr, carbon black content: 6phr, in the condition of various LLDPE contents and high terpolymer of ethylene/butyl acrylate/maleic anhydride content range). As shown in Figure 2, same as EXAMPLE 1, tensile strength and elongation at break increase with terpolymer of ethylene/butyl acrylate/maleic anhydride content. It is found that mechanical properties are increased up to 9phr EBM content and stopped increasing simultaneously. From this result, it is apparent that strong adhesive forces by terpolymer of ethylene/butyl acrylate/maleic anhydride effects up to 9phr terpolymer of ethylene/butyl acrylate/maleic anhydride content. Anyway, it is re-confirmed that the terpolymer of ethylene/butyl acrylate/maleic anhydride adhesive forces between base polymers and flame retardants increase the pulling power between base polymers and flame retardants and then strain force and elongation length are increased.

### EXAMPLE 2

| Ingredient/Property | 7 | 8 | 9 | 10 | 11 |
|---|---|---|---|---|---|
| EVA | 80 | 80 | 80 | 80 | 80 |
| LLDPE | 20 | 11 | 8 | 5 | 2 |
| Terpolymer of ethylene/butyl acrylate/maleic anhydride | 0 | 9 | 12 | 15 | 18 |
| Magnesium hydroxide | 114 | 114 | 114 | 114 | 114 |
| Secondary flame retardants | 11 | 11 | 11 | 11 | 11 |
| Carbon black | 6 | 6 | 6 | 6 | 6 |
| Pentaerythritol tetrakis(3(3,5-di tert-buty-4-hydroxyphenyl)propionate | 1 | 1 | 1 | 1 | 1 |
| Tensile strength(MPa) | 8 | 14 | 14.5 | 14.5 | 14.5 |
| Elongation at break(%) | 190 | 225 | 220 | 220 | 210 |
| LOI (%) | 34 | 34 | 35 | 33 | 34 |
| VW-1, UL1581 | Pass | Pass | Pass | Pass | Pass |
| Volume resistivity (Ωcm) | 5 x 10¹⁴ | 5 x 10¹⁴ | 5 x 10¹⁴ | 5 x 10¹⁴ | 5 x 10¹⁴ |

Figure 2: Mechanical properties of EVA based halogen free flame retardant compounds as a function of terpolymer of ethylene/butyl acrylate/maleic anhydride (EBM) content. (Before cross-linking reactions, magnesium hydroxide content: 120phr, carbon black content: 6phr, in the condition of non LLDPE content and high terpolymer of ethylene/butyl acrylate/maleic anhydride content range).

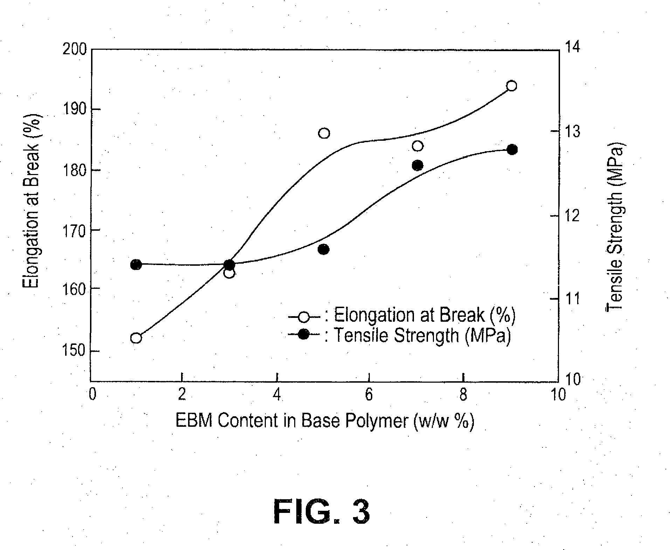

At next step, once again, low terpolymer of ethylene/butyl acrylate/maleic anhydride contained compounds were conducted (magnesium hydroxide content is changed from 114phr to 120phr). EXAMPLE 3 shows EVA based halogen free flame retardant compounds as a function of terpolymer of ethylene/butyl acrylate/maleic anhydride content. (Before cross-linking reactions, magnesium hydroxide content: 120phr, carbon black content: 6phr, in the condition of various LLDPE contents and low terpolymer of ethylene/butyl acrylate/maleic anhydride content range) As shown in Figure 3, same as previous EXAMPLE's results, mechanical properties are changed with various terpolymer of ethylene/butyl acrylate/maleic anhydride contents. Namely, mechanical properties (tensile strength and elongation at break) increase with increase of terpolymer of ethylene/butyl acrylate/maleic anhydride content. It is definitely apparent that, in the case of terpolymer of ethylene/butyl acrylate/maleic anhydride contained formulations, both properties are increased simultaneously. Terpolymer of ethylene/butyl acrylate/maleic anhydride contributes greatly to increase of both mechanical properties in the presence of high content of flame retardants (inorganic fillers). The simultaneous increase in both tensile strength and elongation at break is attributed to presence of strong adhesive forces which conglomerate base polymers and flame retardants. The adhesive forces increase the pulling power between base polymers and flame retardants and then strain force and elongation length are increased. It is evident that these strong adhesive forces are due to the presence of terpolymer of ethylene/butyl acrylate/maleic anhydride.

### EXAMPLE 3

| Ingredient/Property | 12 | 13 | 14 | 15 | 16 |
|---|---|---|---|---|---|
| EVA | 80 | 80 | 80 | 80 | 80 |
| LLDPE | 19 | 17 | 15 | 13 | 11 |
| Terpolymer of ethylene/butyl acrylate/maleic anhydride | 1 | 3 | 5 | 7 | 9 |
| Magnesium hydroxide | 120 | 120 | 120 | 120 | 120 |
| Secondary flame retardants | 11 | 11 | 11 | 11 | 11 |
| Carbon black | 6 | 6 | 6 | 6 | 6 |
| Pentaerythritol tetrakis(3(3,5-di tert-buty-4-hydroxyphenyl)propionate | 1 | 1 | 1 | 1 | 1 |
| Tensile strength(MPa) | 11.3 | 11.2 | 11.6 | 12.6 | 12.8 |
| Elongation at break(%) | 152 | 163 | 186 | 184 | 192 |
| LOI (%) | 36 | 35 | 35 | 34 | 35 |
| VW-1, UL1581 | Pass | Pass | Pass | Pass | Pass |
| Volume resistivity (Ωcm) | 5 x 10¹⁴ | 5 x 10¹⁴ | 5 x 10¹⁴ | 5 x 10¹⁴ | 5 x 10¹⁴ |

Figure 3. Mechanical properties of EVA based halogen free flame retardant compounds as a function of terpolymer of ethylene/butyl acrylate/maleic anhydride (EBM) content. (Before cross-linking reactions, magnesium hydroxide content: 120phr, carbon black content: 6phr, in the condition of non LLDPE content and low terpolymer of ethylene/butyl acrylate/maleic anhydride content range)

As shown in previous Pre-test EXAMPLE 6, it is found that mechanical properties are changed with changing of magnesium hydroxide/huntite hydromagnesite mixing ratios. Namely, tensile strength decreases and elongation at break increases with increase of huntite hydromagnesite content. And then, higher mechanical properties are obtained from magnesium hydroxide/huntite hydromagnesite mixing formulations.

At next step, 9 phr terpolymer of ethylene/butyl acrylate/maleic anhydride and radiation cross-linking agent are added to Pre-test EXAMPLE 6. EXAMPLE 4 shows EVA based halogen free flame retardant compounds (for natural colour applications) as a function of changing magnesium hydroxide/huntite hydromagnesite mixing ratios. (Before/after cross-linking reactions, LLDPE content: 15% in base polymers and terpolymer of ethylene/butyl acrylate/maleic anhydride content: 9phr)

It is definitely apparent that, when we compare mechanical properties before and after cross-linking reactions, terpolymer of ethylene/butyl acrylate/maleic anhydride contained formulations show much higher mechanical properties than those of non terpolymer of ethylene/butyl acrylate/maleic anhydride contained formulations. Moreover, same as Pre-test EXAMPLE 6, in the case of after cross-linking reactions, tensile strength decreases and elongation at break increases with increase of huntite hydromagnesite content. When we use two flame retardants in halogen free flame retardant compounds (magnesium hydroxide/huntite hydromagnesite mixing flame retardants), it is found that terpolymer of ethylene/butyl acrylate/maleic anhydride also contributes greatly to increase of both mechanical properties. The simultaneous increase in both tensile strength and elongation at break is attributed to presence of strong adhesive forces which conglomerate base polymers and two different flame retardants. The adhesive forces increase the pulling power between base polymers and two different flame retardants and then strain force and elongation length are increased. It is evident that these strong adhesive forces are due to the presence of terpolymer of ethylene/butyl acrylate/maleic anhydride.

Accordingly, it is found that 1) in the case of before cross-linking reactions, it is possible that higher mechanical properties can be obtained by terpolymer of ethylene/butyl acrylate/maleic anhydride. 2) in the case of after cross-linking reactions, it is possible that higher mechanical properties can be obtained by suitable magnesium hydroxide /huntite hydromagnesite mixing ratios.

From the excellent results, tube production was conducted by Number 18 formulation with terpolymer of ethylene/butyl acrylate/maleic anhydride and without terpolymer of ethylene/butyl acrylate/maleic anhydride as follows. Original tube was extruded at normal 40mm extruder (L/D=24) at the temperature range of 180-220 °C with air flow back up to keep round tube shape. The extruding, cross-linking and expansion conditions are not especially different from normal tube productions. 3.5mm inside diameter (thickness: 0.25mm) was extruded and cross-linked (by multi rounding movements in under-beam cross-linking equipment) and then expanded to 7mm inside diameter (thickness: 0.15mm). When with/without terpolymer of ethylene/butyl acrylate/maleic anhydride in compounds are compared, at the process of extruding and under-beam cross-linking, it was found that terpolymer of ethylene/butyl acrylate/maleic anhydride contained compound showed better process ability than non terpolymer of ethylene/butyl acrylate/maleic anhydride contained compound. Also, terpolymer of ethylene/butyl acrylate/maleic anhydride contained product showed lower longitudinal direction extension ratio (at least 10-20% lower) and higher radial direction expansion ratio. Of course, products showed excellent flame retardancy (pass UL-1581, VW-1) and electrical properties for usage of practical heat shrinkable tube applications.

### EXAMPLE 4

| Ingredient/Property | 17 | 18 | 19 | 20 | 21 |
|---|---|---|---|---|---|
| EVA | 85 | 85 | 85 | 85 | 85 |
| LLDPE | 15 | 15 | 15 | 15 | 15 |
| Huntite hydromagnesite | 63 | 73 | 83 | 93 | 103 |
| Magnesium hydroxide | 65 | 55 | 45 | 35 | 25 |
| Secondary flame retardants (Zinc borate, Boric acid, Barium strearate type) | 25 | | | | |
| Pentaerythritol tetrakis(3(3,5-di tert-buty-4-hydroxyphenyl)propionate | 1 | 1 | 1 | 1 | 1 |
| Trimethylolpropane trimetharcrylate | 5 | 5 | 5 | 5 | 5 |
| Terpolymer of ethylene/butyl acrylate/maleic anhydride | 9 | 9 | 9 | 9 | 9 |

| Before cross-linking | | | | | |
|---|---|---|---|---|---|
| Tensile strength(MPa) | 12 | 12.5 | 12.5 | 12.5 | 12.5 |
| Elongation at break(%) | 195 | 200 | 200 | 205 | 205 |
| Dose (kGy) (air atmosphere) | 150 | | | | |
| Tensile strength(MPa) | 17 | 16 | 17 | 17 | 16 |
| Elongation at break(%) | 220 | 225 | 225 | 230 | 240 |
| LOI (%) | 39 | 39 | 37 | 37 | 38 |
| VW-1, UL1581 | Pass | Pass | Pass | Pass | Pass |
| Volume resistivity (Ωcm) | 5x10¹⁴ | 5x10¹⁴ | 5 x 10¹⁴ | 5 x 10¹⁴ | 5 x 10¹⁴ |

At next step, flexible halogen free flame retardant compounds (for natural colour applications) for heat shrinkable tube applications were conducted. EXAMPLE 5 shows EVA based halogen free flame retardant compounds as a function of changing magnesium hydroxide/huntite hydromagnesite mixing ratios. (Before/after cross-linking reactions, LLDPE content: 8% in base polymers and terpolymer of ethylene/butyl acrylate/maleic anhydride content: 9phr) These compounds are consisted of less flame retardants (total 100phr content) and less LLDPE (8phr content) in compounds to increase flexibility. Due to reduced flame retardants and LLDPE contents, flexibility and elongation at break were much increased. It is apparent that, same as previous EXAMPLES, when we compare mechanical properties before and after cross-linking reactions, terpolymer of ethylene/butyl acrylate/maleic anhydride contained formulations show much higher mechanical properties than those of non terpolymer of ethylene/butyl acrylate/maleic anhydride contained formulations. Moreover, same as Pre-test EXAMPLE 6, in the case of after cross-linking reactions, tensile strength decreases and elongation at break increases with increase of huntite hydromagnesite content. Similar results were obtained from the results, namely, it is found that 1) in the case of before cross-linking reactions, and it is possible that higher mechanical properties can be obtained by terpolymer of ethylene/butyl acrylate /maleic anhydride. 2) in the case of after cross-linking reactions, it is possible that higher mechanical properties can be obtained by suitable magnesium hydroxide/huntite hydromagnesite mixing ratios.

From the excellent results, tube production was conducted by Number 23 formulation with terpolymer of ethylene/butyl acrylate/maleic anhydride and without terpolymer of ethylene/butyl acrylate/maleic anhydride as follows. Original tube was extruded at normal 40mm extruder (L/D=24) at the temperature range of 180-220 °C with air flow back up to keep round tube shape. The extruding, cross-linking and expansion conditions were not specially different from normal tube productions. 4.5mm inside diameter (thickness: 0.25mm) was extruded and cross-linked (by multi rounding movements in under-beam cross-linking equipment) and then expanded to 9mm inside diameter (thickness: 0.15mm).

Comparing between terpolymer of ethylene/butyl acrylate/maleic anhydride contained compound and non terpolymer of ethylene/butyl acrylate/maleic anhydride contained compound at the process of extruding and under-beam cross-linking. It was found that terpolymer of ethylene/butyl acrylate/maleic anhydride contained compound showed better process ability than non terpolymer of ethylene/butyl acrylate/maleic anhydride contained compound. Moreover, terpolymer of ethylene/butyl acrylate/maleic anhydride contained product showed lower longitudinal direction extension ratio (at least 10-20% lower) and higher radial direction expansion ratio. Of course, both products showed excellent flame retardancy (pass UL VW-1) and electrical properties for usage of practical heat shrinkable tube applications.

### EXAMPLE 5

| | | | | | |
|---|---|---|---|---|---|
| Ingredient/Property | 22 | 23 | 24 | 25 | 26 |
| EVA | 92 | 92 | 92 | 92 | 92 |
| LLDPE | 8 | 8 | 8 | 8 | 8 |
| Huntite hydromagnesite | 50 | 55 | 60 | 65 | 70 |
| Magnesium hydroxide | 50 | 45 | 40 | 35 | 30 |
| Secondary flame retardants (Zinc borate, Boric acid, Barium strearate) | 25 | | | | |
| Pentaerythritol tetrakis(3(3,5-di tert-buty-4-hydroxyphenyl)propionate | 1 | 1 | 1 | 1 | 1 |
| Trimethylol propane trimetharcrylate | 5 | 5 | 5 | 5 | 5 |
| Terpolymer of ethylene/butyl acrylate/maleic anhydride | 9 | 9 | 9 | 9 | 9 |

| Before cross-linking | | | | | |
|---|---|---|---|---|---|
| Tensile strength(MPa) | 10 | 10.5 | 10 | 10.5 | 11 |
| Elongation at break(%) | 230 | 240 | 235 | 240 | 240 |
| Dose (kGy) (air atmosphere) | 150 | | | | |
| Tensile strength(MPa) | 15 | 14 | 14 | 14.5 | 14 |
| Elongation at break(%) | 270 | 275 | 280 | 290 | 300 |
| LOI (%) | 29 | 30 | 29 | 29 | 29 |
| VW-1, UL1581 | Pass | Pass | Pass | Pass | Pass |
| Volume resistivity (Ωcm) | 5 x 10¹⁴ | 5 x 10¹⁴ | 5 x 10¹⁴ | 5 x 10¹⁴ | 5 x 10¹⁴ |

At next step, black colour flexible halogen free flame retardant compounds (for weather resistance applications) for heat shrinkable tube applications were conducted. EXAMPLE 6 shows EVA based halogen free flame retardant compounds as a function of changing magnesium hydroxide/huntite hydromagnesite mixing ratios. (Before/after cross-linking reactions, LLDPE content: 8% in base polymers, terpolymer of ethylene/butyl acrylate/maleic anhydride content: 9phr and carbon black content: 6phr) These compounds are consisted of less flame retardants (total 100phr content), less LLDPE (8phr content) and carbon black content (6phr) in compounds to increase flexibility and weather resistance.

It is apparent that, same as previous EXAMPLEs, when we compared mechanical properties before and after cross-linking reactions, terpolymer of ethylene/butyl acrylate/maleic anhydride contained formulations showed much higher mechanical properties than those of non terpolymer of ethylene/butyl acrylate/maleic anhydride contained formulations. Moreover, in the case of after cross-linking reactions, tensile strength decreases and elongation at break increases with increase of huntite hydromagnesite content.

Mostly, similar results were obtained, namely, it was found that 1) in the case of before cross-linking reactions, it is possible that higher mechanical properties can be obtained by terpolymer of ethylene/butyl acrylate /maleic anhydride. 2) In the case of after cross-linking reactions, it is possible that higher mechanical properties can be obtained by suitable magnesium hydroxide/huntite hydromagnesite mixing ratios.

From the excellent results, tube production was conducted by Number 28 formulation with terpolymer of ethylene/butyl acrylate/maleic anhydride and without terpolymer of ethylene/butyl acrylate/maleic anhydride as follows. Original tube was extruded at normal 40mm extruder (L/D=24) at the temperature range of 180-220 °C with air flow back up to keep round tube shape. The extruding, cross-linking and expansion conditions were not specially different from normal tube productions. 3.5mm inside diameter (thickness: 0.25mm) was extruded and cross-linked (by multi rounding movements in under-beam cross-linking equipment) and then expanded to 7mm inside diameter (thickness: 0.15 mm).

Comparing between terpolymer of ethylene/butyl acrylate/maleic anhydride contained compound and non terpolymer of ethylene/butyl acrylate/maleic anhydride contained compound at the process of extruding and under-beam cross-linking. It was found that terpolymer of ethylene/butyl acrylate/maleic anhydride contained compound showed better process ability than non terpolymer of ethylene/butyl acrylate/maleic anhydride contained compound. Moreover, terpolymer of ethylene/butyl acrylate/maleic anhydride contained product showed lower longitudinal direction extension ratio (at least 10-20% lower) and higher radial direction expansion ratio. Of course, both products show excellent flame retardancy (pass UL-1581, VW-1) and electrical properties for usage of practical heat shrinkable tube applications.

### EXAMPLE 6

| | | | | | |
|---|---|---|---|---|---|
| Ingredient/Property | 27 | 28 | 29 | 30 | 31 |
| EVA | 92 | 92 | 92 | 92 | 92 |
| LLDPE | 8 | 8 | 8 | 8 | 8 |
| Huntite hydromagnesite | 50 | 55 | 60 | 65 | 70 |
| Magnesium hydroxide | 50 | 45 | 40 | 35 | 30 |
| Secondary flame retardants (Zinc borate, Boric acid, Barium strearate) | 25 | | | | |
| Pentaerythritol tetrakis(3(3,5-di tert-buty-4-hydroxyphenyl)propionate | 1 | 1 | 1 | 1 | 1 |
| Carbon black | 6 | 6 | 6 | 6 | 6 |
| Trimethylolpropane trimetharcrylate | 5 | 5 | 5 | 5 | 5 |
| Terpolymer of ethylene/butyl acrylate/maleic anhydride | 9 | 9 | 9 | 9 | 9 |

| Before cross-linking | | | | | |
|---|---|---|---|---|---|
| Tensile strength(MPa) | 11 | 10.5 | 10.5 | 10.5 | 10 |
| Elongation at break(%) | 225 | 230 | 230 | 235 | 235 |
| Dose (kGy) (air atmosphere) | 150 | | | | |
| Tensile strength(MPa) | 16 | 14,5 | 14.5 | 14 | 14.5 |
| Elongation at break(%) | 260 | 270 | 275 | 290 | 295 |
| LOI (%) | 30 | 31 | 30 | 30 | 31 |
| VW-1, UL1581 | Pass | Pass | Pass | Pass | Pass |
| Volume resistivity (Ωcm) | 5 x 10¹⁴ | 5 x 10¹⁴ | 5 x 10¹⁴ | 5 x 10¹⁴ | 5 x 10¹⁴ |

At next step, EPDM added natural colour flexible halogen free flame retardant compounds (for improving elastomeric property) for heat shrinkable tube applications were conducted. EXAMPLE 7 shows EVA based halogen free flame retardant compounds as a function of changing magnesium hydroxide/huntite hydromagnesite mixing ratios. (Before/after cross-linking reactions, LLDPE content: 8% in base polymers, EPDM content: 5% in base polymers and terpolymer of ethylene/butyl acrylate/maleic anhydride content: 9phr) These compounds are consisted of less flame retardants (total 100phr content), less LLDPE (8% content in base polymers) and EPDM content (5% content in base polymers) in compounds to increase flexibility and elastomeric property.

It is apparent that, same as previous EXAMPLEs, when mechanical properties before and after cross-linking reactions are compared, terpolymer of ethylene/butyl acrylate/maleic anhydride contained formulations showed much higher mechanical properties than those of non terpolymer of ethylene/butyl acrylate/maleic anhydride contained formulations. Moreover, in the case of after cross-linking reactions, tensile strength decreases and elongation at break increases with increase of huntite hydromagnesite content.

Mostly, similar results were obtained, namely, it was found that 1) in the case of before cross-linking reactions, it is possible that higher mechanical properties can be obtained by terpolymer of ethylene/butyl acrylate/maleic anhydride. 2) in the case of after cross-linking reactions, it is possible that higher mechanical properties can be obtained by suitable magnesium hydroxide/huntite hydromagnesite mixing ratios.

From the excellent results, tube production was conducted by Number 33 formulation with terpolymer of ethylene/butyl acrylate/maleic anhydride and without terpolymer of ethylene/butyl acrylate/maleic anhydride as follows. Original tube was extruded at normal 40mm extruder (L/D=24) at the temperature range of 180-220 °C with air flow back up to keep round tube shape. The extruding, cross-linking and expansion conditions were not specially different from normal tube productions. 3.5mm inside diameter (thickness: 0.25mm) was extruded and cross-linked (by multi rounding movements in under-beam cross-linking equipment) and then expanded to 7mm inside diameter (thickness: 0.15mm).

Comparing between terpolymer of ethylene/butyl acrylate/maleic anhydride contained compound and non terpolymer of ethylene/butyl acrylate/maleic anhydride contained compound at the process of extruding and under-beam cross-linking. In the cases of EPDM contained compounds, it was also found that 1) EPDM contained products showed higher elastomeric property than non EPDM contained products, 2) terpolymer of ethylene/butyl acrylate/maleic anhydride contained compound showed better process ability than non terpolymer of ethylene/butyl acrylate/maleic anhydride contained compound. Moreover, terpolymer of ethylene/butyl acrylate/maleic anhydride contained product showed lower longitudinal direction extension ratio (at least 10-20% lower) and higher radial direction expansion ratio. Of course, both products showed excellent flame retardancy (pass UL-1581, VW-1) and electrical properties for usage of practical heat shrinkable tube applications.

### EXAMPLE 7

| | | | | | |
|---|---|---|---|---|---|
| Ingredient/Property | 32 | 33 | 34 | 35 | 36 |
| EVA | 87 | 87 | 87 | 87 | 87 |
| LLDPE | 8 | 8 | 8 | 8 | 8 |
| EPDM | 5 | 5 | 5 | 5 | 5 |
| Huntite hydromagnesite | 50 | 55 | 60 | 65 | 70 |
| Magnesium hydroxide | 50 | 45 | 40 | 35 | 30 |
| Secondary flame retardants (Zinc borate, Boric acid, Barium strearate) | 25 | | | | |
| Pentaerythritol tetrakis(3(3,5-di tert-buty-4-hydroxyphenyl)propionate | 1 | 1 | 1 | 1 | 1 |
| Trimethylolpropane trimetharcrylate | 5 | 5 | 5 | 5 | 5 |
| Terpolymer of ethylene/butyl acrylate/maleic anhydride | 9 | 9 | 9 | 9 | 9 |

| Before cross-linking | | | | | |
|---|---|---|---|---|---|
| Tensile strength(MPa) | 10 | 11 | 11 | 10.5 | 11 |
| Elongation at break(%) | 220 | 220 | 235 | 235 | 240 |
| Dose (kGy) (air atmosphere) | 150 | | | | |
| Tensile strength(MPa) | 15 | 15 | 15 | 14.5 | 15 |
| Elongation at break(%) | 270 | 270 | 285 | 280 | 290 |
| LOI (%) | 28 | 30 | 28 | 29 | 28 |
| VW-1, UL1581 | Pass | Pass | Pass | Pass | Pass |
| Volume resistivity (Ωcm) | 5 x 10¹⁴ | 5 x 10¹⁴ | 5 x 10¹⁴ | 5 x 10¹⁴ | 5 x 10¹⁴ |

In heat shrinkable tube market, the demands of halogen free flame retardant products are increasing. Specially, halogen free flame retardant thin wall HST demands are increasing. In general, more than 50% w/w of flame retardants is required in halogen free flame retardant formulations for heat shrinkable tube compounds to achieve the targeted flame retardancy and mechanical properties. Practically, a high content of 80-150phr, of flame retardants are needed to achieve commercially acceptable flame retardancy, Such high flame retardant loadings can cause interfacial problems between matrix polymer and flame retardants and then, can deteriorate mechanical properties. On the other hand, materials for heat shrinkable tube must meet appropriate tensile strength, elongation at break, thermal resistance and flame retardancy. Particularly, the halogen free flame retardant heat shrinkable tube compounds may preserve excellent melt strength properties because highly flame retardant compounded materials show very poor melt strength in thin wall tube processing, In this disclosure, efforts were made to improve melt strength of halogen free flame retardant heat shrinkable tube compounds by utilizing the adhesive force of random terpolymer of ethylene, butyl acrylate and maleic anhydride (EBM) between base polymers and flame retardants. The strong adhesive forces between matrix polymers and flame retardants contribute to increase melt strength in halogen free flame retardant heat shrinkable tube extruding. From detailed investigations of adhesive strength between base polymer and flame retardant, excellent results of extruding speed increase, thickness uniformity and surface improvements were obtained in thin wall halogen free flame retardant heat shrinkable tube for manufacturing. The present invention shows a reliable method for producing halogen free flame retardant heat shrinkable tubes without deterioration of mechanical properties and electrical properties. And so, produced halogen free flame retardant heat shrinkable tubes meet most of the standard requirements. The instant composition comprising of halogen free flame retardant compositions are particularly suitable for use in thin-wall heat shrinkable tube productions.

## Claims

1. A process of making a heat shrinkable tube, comprising:
melting a polymer 100 parts by weight for one minute at 120°C at a speed of 40 rpm, wherein the polymer is at least one of a ethylene vinyl acetate (EVA), EVA/polyethylene, ethylene alpha olefin, ethylene alpha olefin/polyethylene, ethylene ethyl acrylate, ethylene ethyl acrylate/polyethylene, EVA/polyethylene/ethylene propylene diene terpolymer (EPDM), ethylene alpha olefin/polyethylene/EPDM and ethylene ethyl acrylate/polyethylene/EPDM;
mixing the following ingredients to the polymer that has been melted and further melting for 10 minutes at 120°C to form a mixture:
70 parts a flame retardant by weight, wherein the flame retardant is at least one of a magnesium hydroxide, huntite hydromagnesite and a combination thereof;
1-20 parts of a secondary flame retardant by weight, wherein the secondary flame retardant is at least one of a red phosphorous, zinc borate and ammonium octamolybdate;
0.1-0.5 parts of an antioxidant by weight;
1-10 parts of a processing aid by weight;
1-6 parts of a carbon black by weight;
1-15 parts of a terpolymer of ethylene, butyl acrylate and maleic anhydride (EBM) by weight; and
1-15 parts of a radiation cross-linking agents by weight.

2. The process of claim 1, further comprising:
blending the mixture 120°C and passing it through a hot press and compressed at 165°C for 20 minutes to form a sheet.

3. The process of claim 2, further comprising:
radiation cross-linking the sheet using 25kGy double electron beam accelerator of 10 MeV at ambient temperature.

4. A halogen free flame retardant composition for heat shrinkable tube composition suitable for the process of claim 1, comprising:
a polymer is 100 parts by weight, wherein the polymer is at least one of an ethylene vinyl acetate (EVA), EVA/polyethylene, ethylene alpha olefin, ethylene alpha olefin/polyethylene, ethylene ethyl acrylate, ethylene ethyl acrylate/polyethylene, EVA/polyethylene/ethylene propylene diene terpolymer (EPDM), ethylene alpha olefin/polyethylene/EPDM and ethylene ethyl acrylate/polyethylene/EPDM;
a flame retardant is 70 parts by weight, wherein the flame retardant is at least one of a magnesium hydroxide, huntite hydromagnesite and a combination thereof;
a secondary flame retardant is 1-20 parts by weight, wherein the secondary flame retardant is at least one of a red phosphorus, zinc borate and ammonium octamolybdate;
a terpolymer of ethylene, butyl acrylate and maleic anhydride is 1-15 parts by weight;
an antioxidant 0.1-0.5 parts by weight;
a processing aid is 1-10 parts by weight;
a radiation cross-linking agent is 1-15 parts by weight; and
a carbon black is 1-6 parts by weight.

5. The composition of claims 4, wherein the antioxidant is pentaerythritol tetrakis(3(3,5-di-tert-butyl-4-hydroxyphenyl)propionate.

6. The composition of claims 4, wherein the radiation cross-linking agent is trimethylolpropane trimethacrylate.

7. The composition of claims 4, wherein the polymer by weight is lower than 50% of the total weight of all other components.

## Patentansprüche

1. Verfahren zum Herstellen eines wärmeschrumpfbaren Rohres, welches umfasst:
Schmelzen von 100 Gewichtsteilen eines Polymers für eine 1 Minute bei 120°C bei einer Geschwindigkeit von 40 Upm, wobei das Polymer wenigstens eines ist ausgewählt aus Ethylenvinylacetat (EVA), EVA/Polyethylen, Ethylen-α-olefn, Ethylen-α-olefin/Polyethylen, Ethylenethylacrylat, Ethylenethylacrylat/Polyethylen, EVA/Polyethylen/Ethylen-Propylen-Dien-Terpolymer (EPDM), Ethylen-α-olefin/Polyethylen/EPDM und Ethylenethylacrylat/Polyethylen/EPDM;
Mischen der folgenden Bestandteile zu dem Polymer, das geschmolzen worden ist, und weiteres Schmelzen für 10 Minuten bei 120°C, um eine Mischung zu bilden;
70 Gewichtsteile eines Flammhemmers, wobei der Flammhemmer wenigstens einer aus Magnesiumhydroxid, Huntit-Hydromagnesit und einer Kombination derselben ist;
1-20 Gewichtsteile eines zweiten Flammhemmers, wobei der zweite Flammhemmer wenigstens einer aus rotem Phosphor, Zinkborat und Ammoniumoctamolybdat ist;
0,1-0,5 Gewichtsteile eines Antioxidationsmittels;
1-10 Gewichtsteile einer Verarbeitungshilfe;
1-6 Gewichtsteile Ruß;
1-15 Gewichtsteile eines Terpolymers aus Ethylen, Butylacrylat und Maleinsäureanhydrid (EBM); und
1-15 Gewichststeile eines Strahlungsvernetzungsmittels.

2. Verfahren nach Anspruch 1, weiter umfassend:
Vermischen der Mischung bei 120°C und Führen derselben durch eine heiße Presse und Kompressieren bei 165°C für 20 Minuten, um einen Bogen zu bilden.

3. Verfahren nach Anspruch 2, weiter umfassend:
Strahlungsvernetzen des Bogens unter Verwendung eines 25 kGy-Doppelelektronenstrahlenbeschleunigers von 10 MeV bei Umgebungstemperatur.

4. Halogenfreie Flammhemmerzusammensetzung für eine wärmeschrumpfbare Röhrenzusammensetzung, die für das Verfahren nach Anspruch 1 geeignet ist, umfassend:
100 Gewichtsteile eines Polymers, wobei das Polymer wenigstens eines aus einem Ethylenvinylacetat (EVA), EVA/Polyethylen, Ethylen-α-olefin, Ethylen-α-olefin/Polyethylen, Ethylenethylacrylat, Ethylenethylacrylat/Polyethylen, EVA/Polyethylen/Ethylen-Propylen-Dien-Terpolymer (EPDM), Ethylen-α-olefln/Polyethylen/EPDM und Ethylenethylacrylat/Polyethylen/EPDM ist;
70 Gewichtsteile eines Flammhemmers, wobei der Flammhemmer wenigstens einer aus Magnesiumhydroxid, Huntit-Hydromagnesit und einer Kombination derselben ist;
1-20 Gewichtsteile eines zweiten Flammhemmers, wobei der zweite Flammhemmer wenigstens einer aus rotem Phosphor, Zinkborat und Ammoniumoctamolybdat ist;
1-15 Gewichtsteile eines Terpolymers aus Ethylen, Butylacrylat und Maleinsäureanhydrid;
0,1-0,5 Gewichtsteile eines Antioxidationsmittels;
1-10 Gewichtsteile einer Verarbeitungshilfe;
1-15 Gewichtsteile eines Strahlungsvernetzungsmittels; und
1-6 Gewichtsteile Ruß.

5. Zusammensetzung nach Anspruch 4, wobei das Antioxidationsmittel Pentaerythritoltetrakis(3(3,5-di-tert-butyl-4-hydroxyphenyl)propionat ist.

6. Zusammensetzung nach Anspruch 4, wobei das Strahlungsvernetzungsmittel Trimethylolpropantrimethacrylat ist.

7. Zusammensetzung nach Anspruch 4, wobei das Polymer gewichtsmäßig weniger als 50% des Gesamtgewichts aller anderen Komponenten ausmacht.

## Revendications

1. Procédé de fabrication d'un tube thermorétractable, comprenant les étapes consistant à :
faire fondre un polymère à raison de 100 parties en poids pendant une minute à 120 °C à une vitesse de 40 rpm, le polymère étant au moins l'un d'un éthylène vinyle acétate (EVA), d'un EVA/polyéthylène, d'un éthylène alpha-oléfine, d'un éthylène alpha-oléfine/polyéthylène, d'un éthylène-acrylate d'éthyle, d'un éthylène-acrylate d'éthyle/polyéthylène, d'un terpolymère d'EVA/polyéthylène/éthylène-propylène-diène (EPDM), d'un éthylène alpha-oléfine/polyéthylène/EPDM et d'un éthylène-acrylate d'éthyle/polyéthylène/EPDM ;
mélanger les ingrédients suivants au polymère qui a été fondu et fondre davantage pendant 10 minutes à 120°C afin de former un mélange :
70 parties en poids d'un retardateur de flamme, lequel retardateur de flamme est au moins l'un d'un hydroxyde de magnésium, d'un minerai de huntite et d'hydromagnésite et d'une combinaison de ceux-ci ;
1 à 20 parties en poids d'un deuxième retardateur de flamme, lequel retardateur de flamme est au moins l'un d'un phosphore rouge, d'un borate de zinc et d'un octamolybdate d'ammonium ;
0,1 à 0,5 parties en poids d'un antioxydant ;
1 à 10 parties en poids d'un additif de traitement ;
1 à 6 parties en poids d'un noir de carbone ;
1 à 15 parties en poids d'un terpolymère d'éthylène, d'un acrylate de butyle et d'un anhydride maléique (EBM) ; et
1 à 15 parties en poids d'un agent de réticulation durcissable par rayonnement

2. Procédé selon la revendication 1, comprenant en outre l'étape de :
homogénéisation du mélange à 120 °C et passage dans une presse chauffante et compression à 165 °C pendant 20 minutes pour former une feuille.

3. Procédé selon la revendication 2, comprenant en outre l'étape de :
réticulation durcissable par rayonnement de la feuille en utilisant un accélérateur de 25 kGy à double faisceau d'électrons délivrant une énergie de 10 MeV à température ambiante.

4. Composition retardatrice de flamme exempte d'halogène pour la composition d'un tube thermorétractable adapté au procédé selon la revendication 1, comprenant :
un polymère à raison de 100 parties en poids, le polymère étant au moins l'un d'un éthylène vinyle acétate (EVA), d'un EVA/polyéthylène, d'un éthylène alpha-oléfine, d'un éthylène alpha-oléfine/polyéthylène, d'un éthyléne-acrylate d'éthyle, d'un éthylène-acrylate d'éthyle/polyéthylène, d'un terpolymère dEVA/polyéthylène/ éthylène-propylène-diène (EPDM), d'un éthylène alpha-oléfine/polyéthylène/EPDM et d'un éthyléne-acrylate d'éthyle/polyéthylène/EPDM ;
un retardateur de flamme à raison de 70 parties en poids, lequel retardateur de flamme est au moins l'un d'un hydroxyde de magnésium, d'un minerai de huntite et d'hydromagnésite et d'une combinaison de ceux-ci ;
un deuxième retardateur de flamme à raison de 1 à 20 parties en poids, lequel retardateur de flamme est au moins l'un d'un phosphore rouge, d'un borate de zinc et d'un octamolybdate d'ammonium ;
un terpolymère d'éthylène, un acrylate de butyle et un anhydride maléique à raison de 1 à 15 parties en poids ;
un antioxydant à raison de 0,1 à 0,5 parties en poids ;
un additif de traitement à raison de 1 à 10 parties en poids :
un agent de réticulation durcissable par rayonnement à raison de 1 à 15 parties en poids ; et
un noir de carbone à raison de 1 à 6 parties en poids.

5. Composition selon la revendication 4, l'antioxydant étant du pentaérythritol tétrakis (3(3,5-di-tert-butyl-4-hydroxyphényl)propionate.

6. Composition selon la revendication 4, l'agent de réticulation durcissable par rayonnement étant du triméthacrylate de triméthylolpropane.

7. Composition selon la revendication 4, la teneur en polymère en poids étant inférieure à 50 % du poids total de tous les autres composants.
